# EUROPÄISCHE PATENTSCHRIFT

(11) **EP 2 791 521 B1**
(45) Veröffentlichungstag und Bekanntmachung des Hinweises auf die Patenterteilung: **05.12.2018**
(21) Anmeldenummer: 13737218.1
(22) Anmeldetag: 12.07.2013
(51) Int. Cl.: F16C 33/10, F03B 11/06

(54) **VERTIKALE WELLE MIT GLEITLAGER FÜR EINE TURBINE ODER EINEN GENERATOR**
VERTICAL SHAFT WITH A SLIDE BEARING FOR A TURBINE OR A GENERATOR
ARBRE VERTICAL MUNI D'UN PALIER LISSE POUR UNE TURBINE OU UN GÉNÉRATEUR

(30) Priorität: 13.07.2012 DE 102012013986
(43) Veröffentlichungstag der Anmeldung: 22.10.2014
(73) Patentinhaber: Voith Patent GmbH, 89522 Heidenheim (DE)
(72) Erfinder: HAUSSMANN, Rainer, 89561 Ballmertshofen (DE)
(74) Vertreter: Dr. Weitzel & Partner
(86) Internationale Anmeldenummer: PCT/EP2013/064777
(87) Internationale Veröffentlichungsnummer: WO 2014/009518

(56) Entgegenhaltungen:
- CH-A- 365 131
- SE-C- 121 957

## Beschreibung

Die Erfindung betrifft eine Welle mit hydrodynamischem Gleitlager. Die Welle ist vertikal angeordnet, und das Gleitlager ist ein Radiallager.

Das Lager hat ein ringförmiges, ortsfestes Lagergehäuse, das die Welle umgibt. es stützt sich an der Umgebung ab. Das Lager weist bekannterweise eine Mehrzahl von Lagersegmenten auf. Diese sind der Welle zugewandt und tragen die Welle. Sie bilden mit der Mantelfläche der Welle Lagerspalte.

Die Schmierung des Lagers ist von größter Bedeutung. Die genannten Lagerspalte müssen ständig geschmiert werden. Hierzu ist es notwendig, das Öl in einem Kreislauf zu führen, wobei es unter anderem durch einen externen Kühler gelangt.

Um das Öl in Umlauf zu halten, verwenden bekannte Systeme eine externe Pumpe. Diese stellt einen zusätzlichen Investitionsaufwand dar. Sie muss ständig gewartet werden. Ein Ausfall der Pumpe kann zu erheblichen Schäden der beteiligten Bauteile führen, insbesondere der Welle.

DE 1 813 807 U beschreibt eine vertikale Welle mit mehreren Gleitlagern. Diese Gleitlager sind als hydrodynamische Gleitlager ausgeführt. Ferner ist ringförmiges feststehendes Lagergehäuse vorgesehen, das die Welle umgibt. Eine Mehrzahl von Lagersegmenten sind feste Bestandteile des Lagergehäuses, die die Welle umgeben und tragen und mit dieser Lagerspalte bilden. Eine innere Ölwanne kommuniziert mit dem Lagergehäuse. Das Öl durchströmt das Lagergehäuse sowie eine Verbindungsleitung vom Lagergehäuse zur inneren Ölwanne.

DE 14 00 438 B beschreibt ein Spurlager mit vertikaler Welle. Dabei ist ein Ölkreislauf vorgesehen, der unter anderem eine Kammer, einen Druckraum sowie einen Spaltraum miteinander verbindet.

CH 365 131 A beschreibt eine vertikale Welle mit hydrodynamischem Gleitlager. Die Schrift enthält keine Angaben über Einzelheiten einer Schöpfschaufel.

Der Erfindung liegt die Aufgabe zugrunde, eine vertikale Turbinen- oder Generatorenwelle mit hydrodynamischem Gleitlager gemäß dem Oberbegriff von Anspruch 1 derart zu gestalten, dass das Ölschmiersystem einfacher und kostengünstiger gestaltet werden kann, als bisher bekannter Systeme, und eine höhere Zuverlässigkeit aufweist.
Diese Aufgabe wird durch die Merkmale von Anspruch 1 gelöst.

Der tragende Gedanke der Erfindung besteht darin, aus der Drehenergie der Welle einen Förderimpuls abzuleiten, der das Öl im Ölschmiersystem ständig im Umlauf hält.

Diese Aufgabe wird mit einer Vorrichtung gelöst, die die Merkmale von Anspruch 1 aufweist. Hiermit lässt sich im Ölschmiersystem ein Druck erzeugen, der eine ausreichende Umwälzung des Öls ermöglicht. Externe Zusatzgeräte sind nicht notwendig.

Die Erfindung ist anhand der Zeichnung näher erläutert. Darin ist im Einzelnen folgendes dargestellt:
- Figur 1: zeigt eine erfindungsgemäße Einheit mit einer Welle 1 und einem Lager 2 in einem Axialschnitt.
- Figur 2: zeigt ein Führungsrohr mit einer an deren einem Ende befindlichen Schöpfschaufel, und zwar in einer Seitenansicht 2a, in einer gegenüber der Ansicht 2a verdrehten Ansicht 2b sowie in einem Schnitt 2c gemäß der Schnittlinie A - A.
- Figur 3: zeigt in vergrößerter Darstellung den Bereich um die Schöpfschaufel.
- Figur 4: zeigt in schematisierter Darstellung den Verlauf des Schmiermittels.

Die Welle 1 trägt einen hier nicht gezeigten Rotor einer Wasserturbine. Sie verläuft vertikal. Siehe die Drehachse 1.1.

Das Lager 2 ist ringförmig. Es ist ortsfest und drehfest.

Es umfasst ein Gehäuse 3. das Gehäuse 3 hat die Gestalt einer Ringkammer, die die Welle 1 konzentrisch umgibt. Wichtige Teile des Gehäuses 3 sind eine zylindrische Umfangswand 3.1 sowie ein ringförmiger Boden 3.2 und ein Tragring 3.3. Tragring 3.3 ist mit der Umfangswand 3.1 verschweißt.

Weitere wichtige Bauteile sind Lagersegmente 4. Diese sind beispielsweise leisten- oder plattenförmig. Sie sind in einer Vielzahl rund um die Welle 1 herum angeordnet. Sie bilden mit der Mantelfläche der Welle 1 Lagerspalte 5. Die Lagerspalte 5 müssen geschmiert werden.

Die Welle weist eine innere Ölwanne 1.2 auf. Dieser erstreckt sich über eine gewisse Länge der Welle 1 parallel zur Drehachse 1.1. Die Welle 1 weist ferner eine äußere Ölwanne 1.3 auf, der ebenfalls parallel zur Drehachse 1.1 verläuft und über einen Überlauf 1.4 mit dem inneren Ringspalt kommuniziert.

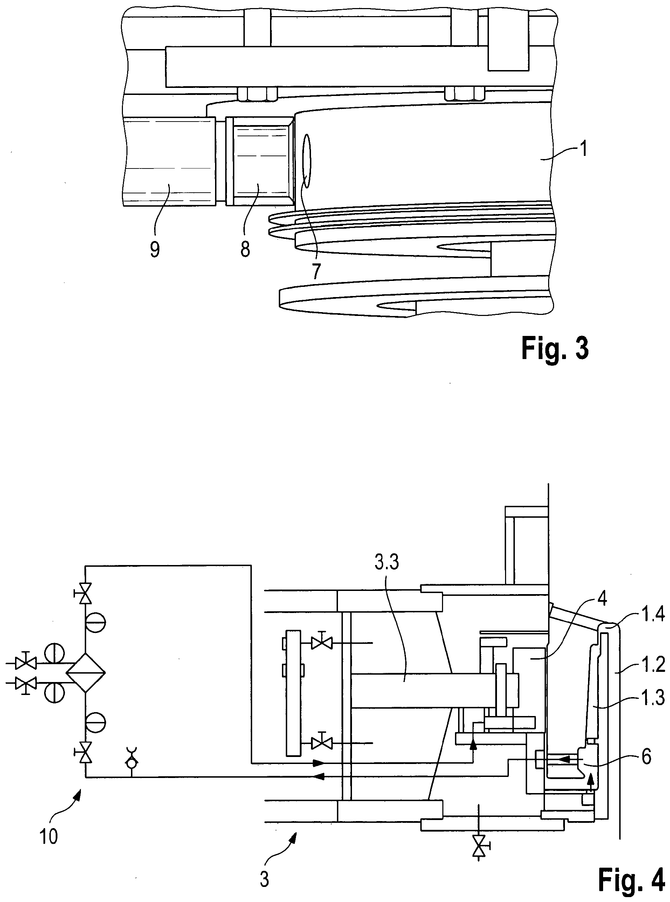

Am unteren Ende der äußeren Ölwanne 1.3 der Welle befindet sich ein ringförmiger Speicherraum, der sich als geschlossener Ringraum um die Drehachse 1.1 erstreckt. An diesen ist eine Mehrzahl von Bohrungen 7 angeschlossen, die in radialer Richtung verlaufen. Sie stehen ihrerseits mit einem Führungsrohr 9 in leitender Verbindung. Am Eintrittsende des Führungsrohres 9 befindet sich eine Schöpfschaufel 8, die für die Erfindung von zentraler Bedeutung ist, wie später noch dargelegt wird. An das andere Ende des Führungsrohres 9 ist eine Kühleinrichtung angeschlossen. Diese ist hier nicht gezeigt, wohl aber in Figur 4.

Beim Betrieb gelangt das Schmiermittel - im Allgemeinen Öl - vom ringförmigen Speicherraum 6 in die Bohrungen 7. Die Fliehkraft zufolge der Rotation der Welle 1 fördert das Öl durch die Bohrungen 7 zur Schöpfschaufel 8. Das Öl prallt dort auf die Schöpfschaufel. Dadurch wird die im Öl enthaltene Geschwindigkeitsenergie in Druckenergie umgewandelt. Es entsteht ein Druck, der groß genug ist, das Öl durch das Führungsrohr 9 hindurch zur Kühleinrichtung zu fördern.

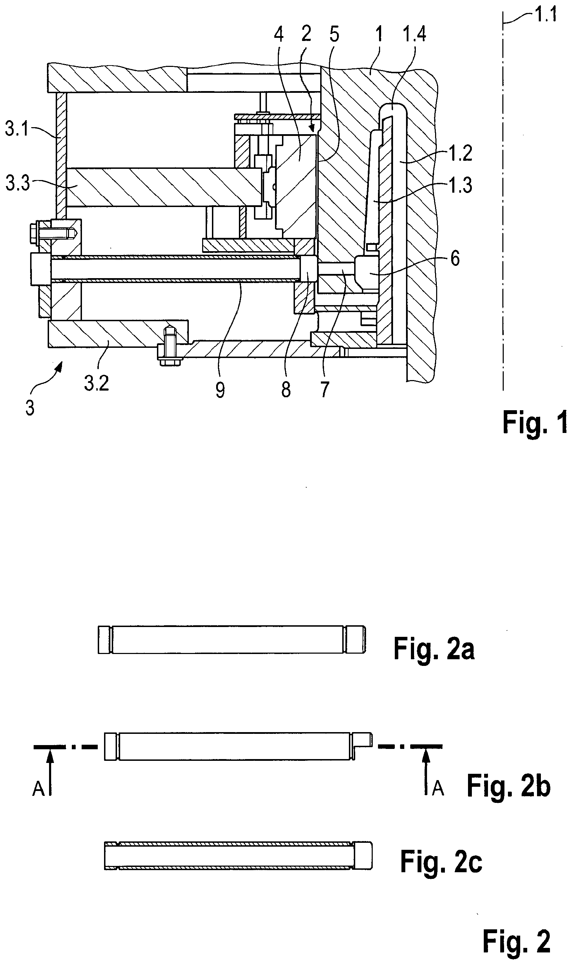

Führungsrohr 9 und Schöpfschaufel 8 sind einteilig. Siehe Figur 2 mit den Figuren 2a bis 2c.

Figur 3 lässt die Verhältnisse im Einzelnen erkennen. Die Bohrungen 7 in der Welle 1 erzeugen den Druckaufbau, der zur Ölumwälzung notwendig ist. Man spricht hier von einer Lochpumpe. Schöpfschaufel 8 sorgt für eine zusätzliche Druckerhöhung, damit das Öl den gesamten Kreislauf durchströmt.

Aus Figur 4 erkennt man den Weg des Öles, veranschaulicht durch Pfeile. Das Öl durchströmt unter anderem eine Kühleinrichtung 10.

### Bezugszeichen liste

- 1: Welle
- 1.1: Drehachse
- 1.2: innerer Ölwanne
- 1.3: äußerer Ölwanne
- 1.4: Überlauf
- 2: Lager
- 3: Gehäuse
- 3.1: zylindrische Umfangswand des Gehäuses
- 3.2: ringförmiger Boden des Gehäuses
- 3.3: Tragring
- 4: Lagersegment
- 5: Lagerspalt
- 6: Speicherraum
- 7: Bohrungen
- 8: Schöpfschaufel
- 9: Führungsrohr
- 10: Kühleinrichtung

## Patentansprüche

1. Vertikale Welle (1) mit hydrodynamischem Gleitlager (2), umfassend die folgenden Merkmale beziehungsweise Bauteile:
ein ringförmiges, feststehendes Lagergehäuse (3), das die Welle (1) umgibt;
eine Mehrzahl von Lagersegmenten (4), die feste Bestandteile des Lagergehäuses (3) sind, die Welle (1) umgeben und tragen, und mit dieser Lagerspalte (5) bilden;
die Welle (1) weist eine radial innere Ölwanne (1.2) sowie eine mit dieser kommunizierende radial äußere Ölwanne (1.3) auf;
ein Ölschmiersystem, so ausgelegt, dass das Öl folgenden Bauteile durchströmen kann:
- das Lagergehäuse (3);
- eine erste Verbindungsleitung vom Lagergehäuse (3) zur inneren Ölwanne (1.2);
- einen Überströmkanal (1.4) vom oberen Ende der radial inneren Ölwanne (1.2) zum oberen Ende der radial äußeren Ölwanne (1.3);
- Bohrungen (7) von der radial äußeren Ölwanne (1.3) zum Lagergehäuse (3);
- eine Kühleinrichtung (10) mit Anschlüssen an das Lagergehäuse (3);
**gekennzeichnet durch** die folgenden Merkmale:
es ist eine Schöpfschaufel (8) vorgesehen, die Bestandteil eines Führungsrohres (9) ist;
das Führungsrohr (9), ist Bestandteil einer leitenden Verbindung zwischen den Bohrungen (7) und der Kühleinrichtung (10);

2. Vertikale Welle mit hydrodynamischem Gleitlager nach Anspruch 1, **dadurch gekennzeichnet, dass** die Schöpfschaufel (8) den Bohrungen unmittelbar nachgeschaltet ist.

## Claims

1. Vertical shaft (1) with a hydrodynamic slide bearing (2), comprising the following features or components:
an annular, stationary bearing housing (3) which surrounds the shaft (1);
a plurality of bearing segments (4) which are fixed constituent parts of the bearing housing (3), which bearing segments surround and support the shaft (1) and form a bearing gap (5) with the latter;
the shaft (1) has a radially inner oil sump (1.2) and a radially outer oil sump (1.3) which communicates with the latter;
an oil lubrication system, configured such that the oil can flow through the following components:
- the bearing housing (3);
- a first connection line from the bearing housing (3) to the inner oil sump (1.2);
- an overflow channel (1.4) from the upper end of the radially inner oil sump (1.2) to the upper end of the radially outer oil sump (1.3);
- bores (7) from the radially outer oil sump (1.3) to the bearing housing (3);
- a cooling device (10) with connections to the bearing housing (3);
**characterized by** the following features:
a scoop shovel (8) is provided, which is a constituent part of a guide pipe (9);
the guide pipe (9) is a constituent part of a conducting connection between the bores (7) and the cooling device (10).

2. Vertical shaft with a hydrodynamic slide bearing according to claim 1, **characterized in that** the scoop shovel (8) is arranged immediately downstream of the bores.

## Revendications

1. Arbre vertical (1) avec palier de glissement hydrodynamique (2), comprenant les caractéristiques et composants suivants :
un corps de palier fixe annulaire (3) qui entoure l'arbre (1) ;
plusieurs segments de palier (4) qui font partie à demeure du corps de palier (3), entourent et portent l'arbre (1) et forment avec celui-ci des intervalles de palier (5) ;
l'arbre (1) présentant un bac à huile intérieur dans le sens radial (1.2) et un bac à huile extérieur dans le sens radial (1.3) qui communique avec celui-ci ;
un système de lubrification à huile conçu de telle manière que l'huile puise parcourir les composants suivants :
- le corps de palier (3),
- une première conduite de communication entre le corps de palier (3) et le bac à huile interne (1.2),
- un conduit de trop-plein (1.4) de l'extrémité supérieure du bac à huile intérieur dans le sens radial (1.2) à l'extrémité supérieure du bac à huile extérieur dans le sens radial (1.3),
- des alésages (7) entre le bac à huile extérieur dans le sens radial (1.3) et le corps de palier (3),
- une installation de refroidissement (10) avec des raccords sur le corps de palier (3) ;
**caractérisé en ce qu'**il est prévu une aube en godet (8) qui fait partie d'un tuyau de guidage (9) et
**en ce que** le tuyau de guidage (9) fait partie d'une communication d'acheminement entre les alésages (7) et l'installation de refroidissement (10).

2. Arbre vertical avec palier de glissement hydrodynamique selon la revendication 1, **caractérisé en ce que** l'aube en godet (8) est montée immédiatement en aval des alésages.
